# EUROPEAN PATENT SPECIFICATION

(11) **EP 4 129 125 B1**
(45) Date of publication and mention of the grant of the patent: **18.09.2024**
(21) Application number: 22165597.0
(22) Date of filing: 30.03.2022
(51) Int. Cl.: A47J 31/40, A47J 42/40

(54) **VARIABLE-VOLUME DOSAGE DEVICE, PARTICULARLY FOR A COFFEE MACHINE AND THE LIKE**
DOSIERVORRICHTUNG MIT VARIABLEM VOLUMEN, INSBESONDERE FÜR EINE KAFFEEMASCHINE UND DERGLEICHEN
DISPOSITIF DE DOSAGE À VOLUME VARIABLE, EN PARTICULIER POUR UNE MACHINE À CAFÉ ET SIMILAIRE

(30) Priority: 03.08.2021 IT 202100020867
(43) Date of publication of application: 08.02.2023
(73) Proprietor: Bianchi Industry S.p.a., Frazione Zingonia (IT)
(72) Inventor: ZAVATTI, Marco, 24040 Castel Rozzone BG (IT); COMOTTI, Nicholas, 20877 Roncello MB (IT)
(74) Representative: Modiano, Micaela Nadia

(56) References cited:
- WO-A1-2005/004685
- WO-A1-2008/101896
- WO-A1-2011/070502
- WO-A1-98/40000
- FR-A1- 2 536 981

## Description

The present invention relates to a variable-volume dosage device, particularly for a coffee machine and the like.

In the field of machines for dispensing infusion beverages and the like, such as coffee, it is known to use grinders with a fixed-chamber dosage unit which have the task of grinding a predetermined amount of coffee beans in order to obtain a predetermined amount of powder to obtain the desired infusion.

In greater detail, coffee beans are ground in the grinding chamber and conveyed into the dosage unit, where a predefined-volume dosage chamber determines the quantity of coffee to be released into the infusion assembly, in which subsequently, upon the passage of hot water, coffee extraction occurs.

Such fixed-chamber dosage units of the known type are not without drawbacks, which include the fact that, since a predetermined quantity of powder is containable in the dispensing chamber, it is possible to obtain only a predetermined quantity of beverage, thus resulting in an excessive or insufficient amount depending on the needs of the user. The document WO 2011/070502 discloses a dosage unit for a coffee machine.

The aim of the present invention is to provide a dosage device, particularly for a coffee machine and the like, capable of varying the quantity of powder to be conveyed into the infusion assembly which can vary according to the needs of the user.

Within this aim, an object of the present invention is to provide a dosage device, particularly for a coffee machine and the like, which ensures an exact match between the dose of powder required and the one actually dispensed.

A further object of the present invention is to provide a dosage device, particularly for a coffee machine and the like, that is capable of giving the greatest assurances of reliability and safety in use.

Not least object of the present invention is to provide a dosage device, particularly for a coffee machine and the like, that can be manufactured by per se known technologies and therefore has low manufacturing costs.

This aim and these and other objects that will become better apparent hereinafter are achieved by a variable-volume dosage device, particularly for a coffee machine and the like, comprising:
- a dosage chamber having an elongated shape and extending between a front opening, through which coffee powder is introduced in said dosage chamber parallel to the longitudinal extension of said dosage chamber, and a rear opening which is opposite to said front opening; said dosage chamber having a further lateral opening which is arranged proximate to said front opening at a lateral surface thereof that is gravity assisted so as to be able to empty said dosage chamber of said coffee powder as a consequence of the fall of said powder by gravity through said lateral opening;
- a flap which is accommodated slidingly in said dosage chamber and can move in contrast with and by virtue of the action of elastic return means between an inactive position, in which said flap is arranged substantially so as to close said dosage chamber at said front opening, and an active position, in which said flap is arranged in said dosage chamber between an intermediate position comprised between said front opening and said rear opening;
- means for sensing the position of said flap within said dosage chamber with respect to said inactive position;
- a release element which is associated externally with respect to said dosage chamber and can move in contrast with and by virtue of the action of said elastic return means between a loading position, in which said release element is arranged so as to occlude said lateral opening, and a release position, in which said lateral opening is free from said release element;
- control and management means and actuation means which are mutually associated and functionally connected respectively to said sensor means, in order to determine the position of said flap, and to said release element, for its movement from said loading position to said release position upon reaching a predetermined quantity of coffee powder accommodated in said dosage chamber correspondingly with a predetermined position of said flap in said dosage chamber.

Further characteristics and advantages of the invention will become better apparent from the description of a preferred but not exclusive embodiment of a variable-volume dosage device, particularly for a coffee machine and the like, illustrated by way of non-limiting example with the aid of the accompanying drawings, wherein:

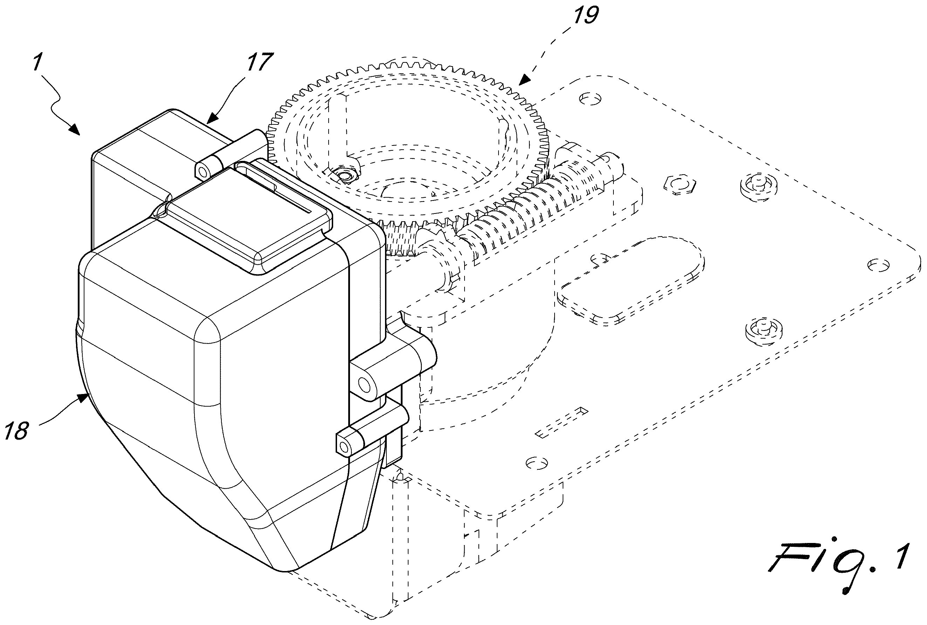

Figure 1 is a perspective view of the dosage device, according to the present invention, associated with a grinding assembly of a coffee machine;

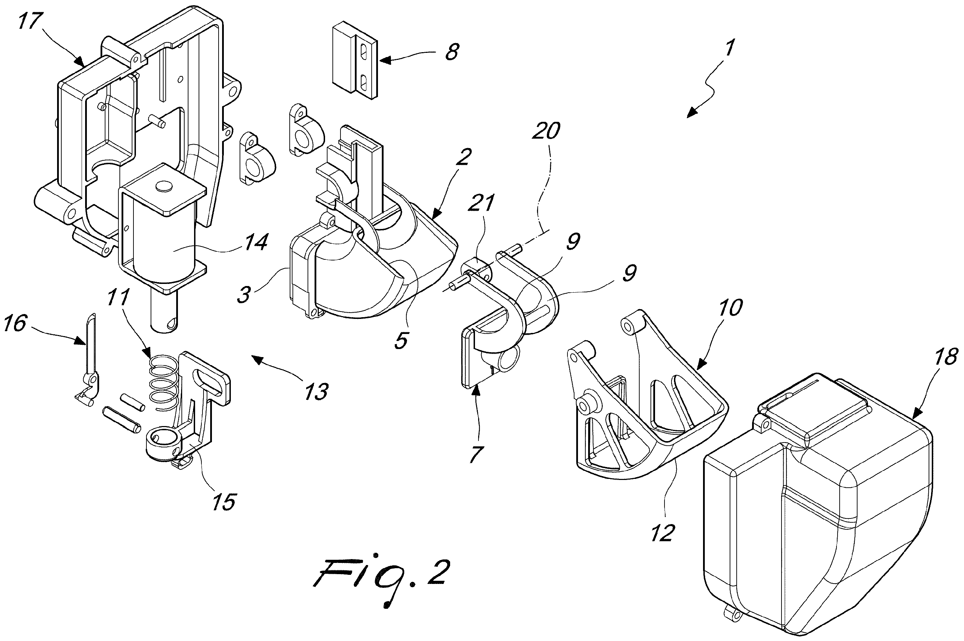

Figure 2 is an exploded perspective view of the dosage device shown in Figure 1;
Figures 3 to 5 are three sectional views of the dosage device shown in the previous figures, taken along a vertical plane and showing in sequence the operation of the dosage device.

With reference to the figures, the variable-volume dosage device, particularly for a coffee machine and the like, generally designated by the reference numeral 1, comprises a dosage chamber 2 which has an elongated shape and extends between a front opening 3, through which coffee powder 4 is introduced in the dosage chamber 2 parallel to the longitudinal extension thereof, and a rear opening 5 which is opposite to the front opening 3.

Advantageously, in the proposed embodiment the dosage chamber 2 has a toroidal geometric shape and extends between the front opening 3 and the rear opening 5 along a circular arc.

However, in a variation not shown of the proposed embodiment, the dosage chamber 2 can have a linear extension.

Accordingly, the components and the kinematic systems described hereinafter will be configured to move in a linear manner inside the linear dosage chamber.

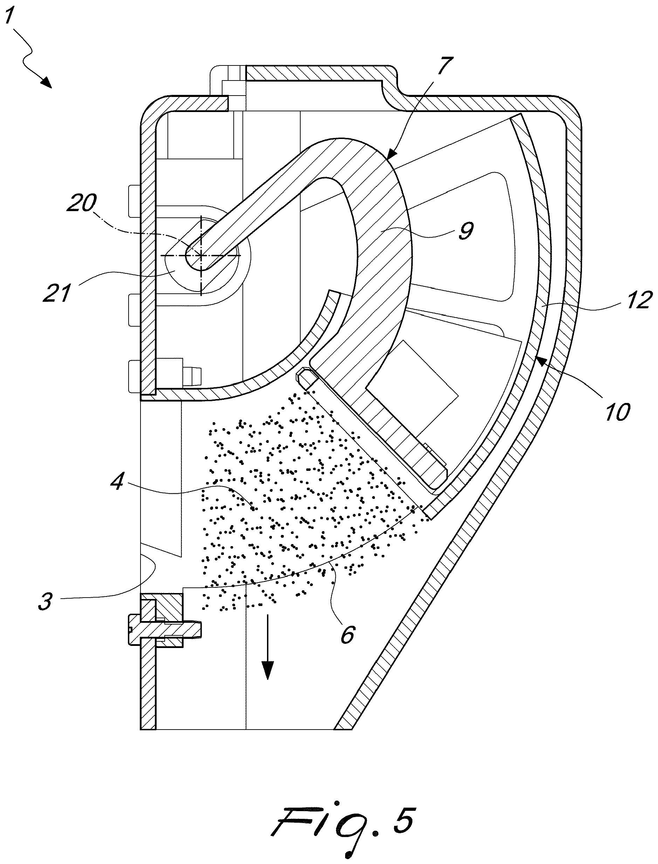

Furthermore, the dosage chamber 2 has a further lateral opening 6 which is arranged proximate to the front opening 3 at a lateral surface thereof that is gravity assisted so as to be able to empty the dosage chamber 2 of the coffee powder 4 as a consequence of the fall of said powder by gravity through the lateral opening 6, as shown in Figure 5.

In the proposed embodiment, the lateral opening 6 is formed at a radially external surface of the dosage chamber 2.

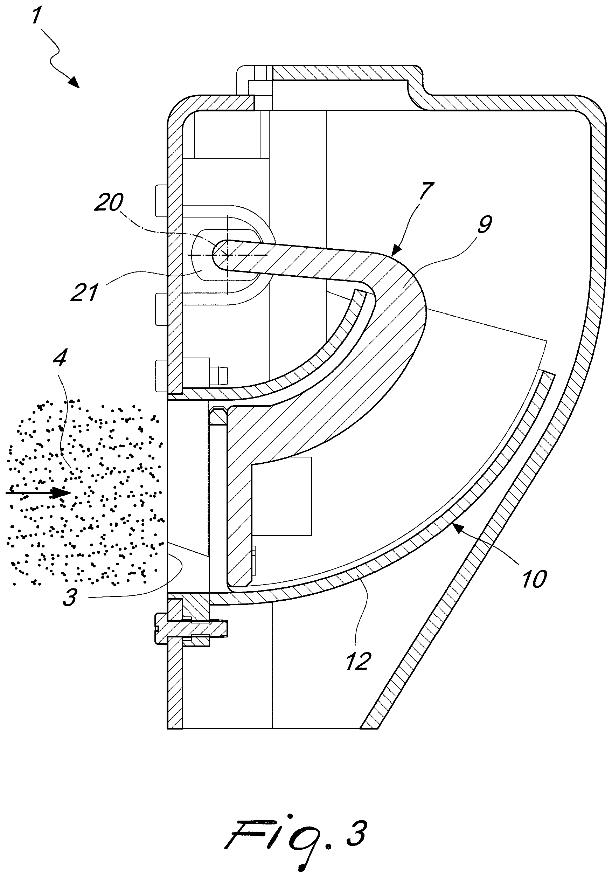

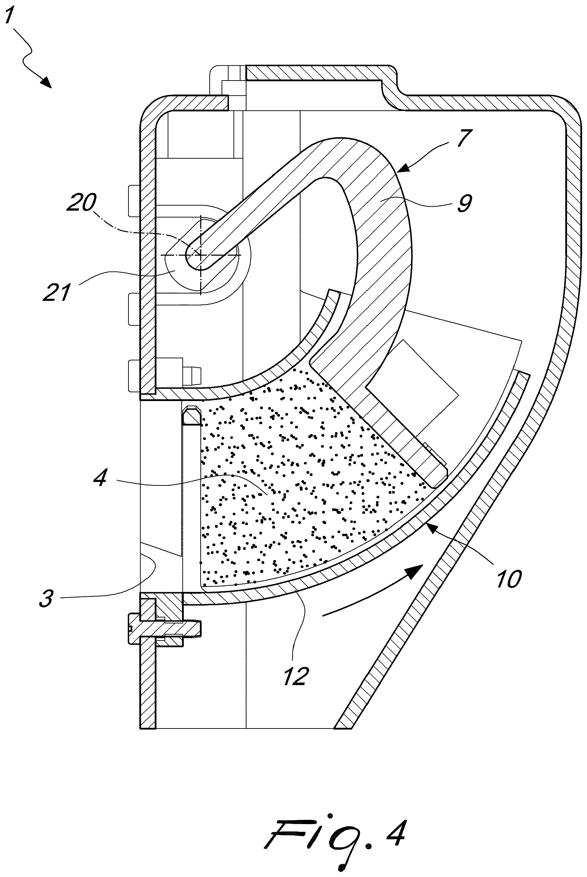

The dosage device 1 further comprises a flap 7 which is accommodated slidingly in the dosage chamber 2 and can move in contrast with and by virtue of the action of elastic return means 11 between an inactive position, shown in Figure 3, in which it is arranged substantially so as to close the dosage chamber 2 at the front opening 3, and an active position, shown in Figures 4 and 5, in which it is arranged in the dosage chamber 2 between an intermediate position comprised between the front opening 3 and the rear opening 5.

The dosage device 1 comprises means 8 for sensing the position of the flap 7 within the dosage chamber 2 with respect to the inactive position.

In greater detail, the sensor means 8 comprise a magnetic sensor of the angular Hall-effect type which is associated with the flap 7, by means of two arms 9, in order to measure its angular position with respect to the inactive position.

The dosage device 1 comprises a release element 10 which is associated externally with respect to the dosage chamber 2 and can move in contrast with and by virtue of the action of the elastic return means 11 between a loading position, shown in Figures 3 and 4, in which it is arranged so as to occlude the lateral opening 6, and a release position, shown in Figure 5, in which the lateral opening 6 is free from the release element 10.

In greater detail, in the proposed embodiment the release element 10 has a toroidal cage-like geometric shape so as to contain the dosage chamber 2 and slide externally with respect to it and comprises a partition 12 arranged at the radially external surface of the dosage chamber 2 so as to occlude or clear the lateral opening 6 depending on the position of the release element 10.

The dosage device 1 further comprises control and management means and actuation means 13 which are mutually associated and functionally connected respectively to the sensor means 8, in order to determine the position of the flap 7, and to the release element 10, for its movement from the loading position to the release position upon reaching a predetermined quantity of coffee powder accommodated in the dosage chamber 2 correspondingly with a predetermined position of the flap 7 in the dosage chamber 2.

In greater detail, the actuation means 13 comprise an electromagnet 14 and a lever mechanism 15 which are mutually associated and functionally connected to the release element 10.

Advantageously, the dosage device 1 comprises a blade 16, for cleaning the front opening 3, which is associated with the dosage chamber 2 at the rim of the front opening 3 and with the actuation means 13 for its movement on the front opening 3.

To complete the dosage device 1, covering housings, a rear one 17 and a front one 18, are provided for the containment of the components of the dosage device 1.

The dosage device 1 can be installed in a machine for dispensing infusion beverages and the like, particularly of the coffee type, comprising at least one from a grinding assembly 19 adapted to grind coffee beans into powder and a coffee powder container adapted to contain ready-made coffee powder, and an infusion assembly functionally connected to a water pump for the infusion of the coffee powder.

In greater detail, the dosage device is arranged between the infusion assembly and one between the grinding assembly 19 and the container so that it is arranged above the infusion assembly for the gravity-assisted fall of the coffee powder 4 through the lateral opening 6 and laterally to one between the grinding assembly 19 and the container for the insertion of the coffee powder 4 in the dosage chamber 2 through the front opening 3.

The operation of the dosage device 1 is clear and evident from what has just been described.

More specifically, it should be highlighted that the coffee powder 4, obtained by grinding coffee beans in the grinding assembly 19, is conveyed into the dosage device 1 by passing through the window arranged on the rear housing, entering the dosage chamber 2 directly through the front opening 3.

The coffee power 4 therefore fills the dosage chamber 2 and progressively moves the flap 7, making it rotate about a rotation axis 20.

A magnet 21 is mounted integrally with the flap 7 and, more specifically, at the end of the arms 9, and is in turn coupled magnetically to a magnetic sensor fixed to the dosage chamber 2.

The flap 7, by rotating about its rotation axis 20, changes the orientation of the magnet 21 with respect to the magnetic sensor, defining in practice a position thereof in space which, in relation to the inactive position, defines a known volume occupied by the coffee powder 4 of the dosage chamber 2.

Such known volume is toroidal in shape and this particularity allows to keep the ratio between the rotation angle and the coffee volume constant (for example: 1cm³/degree).

By means of a calculation algorithm, the control and management means define a plurality of coffee doses in accordance with the recipe that a user of the dispensing machine has created by means of a user interface, in practice rendering the dosage device of the variable-volume type.

At this point, the system, upon reaching the desired volume, activates the electromagnet 14 connected to the release element 10, which releases the coffee powder 4 from the dosage chamber 2.

The coffee powder 4 falls by gravity into the infusion assembly.

Simultaneously with the activation of the release element 10, the blade 16 cleans the inlet front opening 3 of the dosage chamber 2 from the coffee, allowing to expel all the dosed coffee powder 4 comprised therein, including the power remaining, due to surface tension, attached to the coffee entering the dosage chamber 2.

This method ensures in practice the dispensing of all the measured coffee powder 4 and therefore the match between the requested dose and the dispensed dose.

By deactivating the electromagnet, the elastic return means 11, defined by a helical spring, return all the devices to their inactive position, in practice being prepared for a subsequent dosage.

In practice it has been found that the variable-volume dosage device according to the present invention achieves the intended aim and objects.

In practice, the materials used, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A variable-volume dosage device (1), particularly for a coffee machine and the like, comprising:
- a dosage chamber (2) having an elongated shape and extending between a front opening (3), through which coffee powder (4) is introduced in said dosage chamber (2) parallel to the longitudinal extension of said dosage chamber (2), and a rear opening (5) which is opposite said front opening (3); said dosage chamber (2) having a further lateral opening (6) which is arranged proximate to said front opening (3) at a lateral surface thereof so as to be able to empty said dosage chamber (2) of said coffee powder (4) through said lateral opening (6);
- a flap (7) which is accommodated slidingly in said dosage chamber (2) and can move in contrast with and by virtue of the action of elastic return means (11) between an inactive position, in which said flap (7) is arranged substantially so as to close said dosage chamber (2) at said front opening (3), and an active position, in which said flap (7) is arranged in said dosage chamber (2) between an intermediate position comprised between said front opening (3) and said rear opening (5);
- means (8) for sensing the position of said flap (7) within said dosage chamber (2) with respect to said inactive position;
- control and management means and actuation means (13) which are mutually associated and functionally connected respectively to said sensor means (8), in order to determine the position of said flap (7), and to said release element (10), for its movement from said loading position to said release position upon reaching a predetermined quantity of coffee powder (4) accommodated in said dosage chamber (2) correspondingly with a predetermined position of said flap (7) in said dosage chamber (2);
the dosage device being **characterized by**:
- a release element (10) which is associated externally with respect to said dosage chamber (2) and can move in contrast with and by virtue of the action of said elastic return means (11) between a loading position, in which said release element (10) is arranged so as to occlude said lateral opening (6), and a release position, in which said lateral opening (6) is free from said release element (10).

2. The dosage device (1) according to claim 1, **characterized in that** said lateral opening (6) is gravity assisted, so as to be able to empty said dosage chamber (2) of said coffee powder (4) as a consequence of the fall of said powder by gravity through said lateral opening (6).

3. The dosage device (1) according to claim 1 or 2, **characterized in that** said dosage chamber (2) has a linear extension.

4. The dosage device (1) according to claim 1 or 2, **characterized in that** said dosage chamber (2) has a toroidal geometric shape and extends between said front opening (3) and said rear opening (5) along a circular arc.

5. The dosage device (1) according to claim 4, **characterized in that** said sensor means (8) comprise a magnetic sensor of the angular type (21) which is associated with said flap (7) in order to measure its angular position with respect to said inactive position.

6. The dosage device (1) according to one or more of the preceding claims, **characterized in that** said lateral opening (6) is formed at a radially external surface of said dosage chamber (2) and **in that** said release element (10) has a toroidal cage-like geometric shape so as to contain said dosage chamber (2) and slide externally with respect to it; said release element (10) comprising a partition (12) arranged at said radially external surface of said dosage chamber (2) so as to occlude or clear said lateral opening (6) depending on the position of said release element (10).

7. The dosage device (1) according to one or more of the preceding claims, **characterized in that** it comprises a blade (16), for cleaning said front opening (3), associated with said dosage chamber (2) at the rim of said front opening (3) and with said actuation means (13) for its movement on said front opening (3).

8. The dosage device (1) according to one or more of the preceding claims, **characterized in that** it comprises covering housings (17, 18) for the containment of the components of said dosage device (1).

9. A machine for dispensing infused beverages and the like, particularly of the type for coffee, comprising at least one from a grinding assembly (19) adapted to grind coffee beans into powder, a container for coffee powder (4) adapted to contain ready-made coffee powder (4), and an infusion assembly functionally connected to a water pump for the infusion of said coffee powder (4), **characterized in that** it comprises a dosage device (1) according to one or more of the preceding claims, said dosage device (1) being arranged between said infusion assembly and one between said grinding assembly (19) and said container.

10. The machine for dispensing infused beverages and the like according to claim 9, **characterized in that** said dosage device (1) is arranged above said infusion assembly for a gravity-assisted fall of said coffee powder (4) through said lateral opening (6) and laterally to one between said grinding assembly (19) and said container for the insertion of said coffee powder (4) in said dosage chamber (2) through said front opening (3).

## Patentansprüche

1. Eine Dosiervorrichtung (1) mit variablem Volumen, insbesondere für eine Kaffeemaschine und dergleichen, die Folgendes umfasst:
- eine Dosierkammer (2), die eine lang gestreckte Form hat und sich zwischen einer vorderen Öffnung (3), durch welche Kaffeepulver (4) in die Dosierkammer (2) parallel zur Längserstreckung der Dosierkammer (2) eingefüllt wird, und einer hinteren Öffnung (5) erstreckt, die der vorderen Öffnung (3) gegenüberliegt; wobei die Dosierkammer (2) eine weitere seitliche Öffnung (6) hat, die in der Nähe der vorderen Öffnung (3) an einer Seitenfläche davon angeordnet ist, so dass das Kaffeepulver (4) aus der Dosierkammer (2) durch die seitliche Öffnung (6) ausgeleert werden kann;
- eine Klappe (7), die verschiebbar in der Dosierkammer (2) untergebracht ist und sich im Kontrast zu und durch die Wirkung elastischer Rückstellmittel (11) zwischen einer inaktiven Position, in welcher die Klappe (7) im Wesentlichen angeordnet ist, um die Dosierkammer (2) an der vorderen Öffnung (3) zu schließen, und einer aktiven Position bewegen kann, in welcher die Klappe (7) in der Dosierkammer (2) zwischen einer intermediären Position angeordnet ist, die zwischen der vorderen Öffnung (3) und der hinteren Öffnung (5) liegt;
- Mittel (8) zur Erfassung der Position der Klappe (7) in der Dosierkammer (2) im Verhältnis zu der inaktiven Position;
- Steuerungs- und Verwaltungsmittel und Antriebsmittel (13), die miteinander verbunden und funktionell mit den Sensormitteln (8), um die Position der Klappe (7) zu bestimmen, und mit dem Lösungselement (10) verbunden sind, zum Zwecke seiner Bewegung aus der Beladeposition in die Lösungsposition beim Erreichen einer vordefinierten Menge an Kaffeepulver (4), das in der Dosierkammer (2) aufgenommen ist, entsprechend einer vordefinierten Position der Klappe (7) in der Dosierkammer (2);
wobei die Dosiervorrichtung **gekennzeichnet ist durch**
- ein Lösungselement (10), welches außerhalb der Dosierkammer (2) angeschlossen ist und sich im Kontrast zu und durch die Wirkung der elastischen Rückstellmittel (11) zwischen einer Beladeposition, in welcher das Lösungselement (10) angeordnet ist, um die seitliche Öffnung (6) zu verschließen, und einer Lösungsposition bewegen kann, in welcher die seitliche Öffnung (6) frei von dem Lösungselement (10) ist.

2. Die Dosiervorrichtung (1) gemäß Anspruch 1, **dadurch gekennzeichnet, dass** die seitliche Öffnung (6) durch die Schwerkraft unterstützt wird, so dass das Kaffeepulver (4) aus der Dosierkammer (2) infolge des Fallens des Pulvers durch die seitliche Öffnung (6) aufgrund der Schwerkraft ausgeleert werden kann.

3. Die Dosiervorrichtung (1) gemäß Anspruch 1 oder 2, **dadurch gekennzeichnet, dass** die Dosierkammer (2) eine lineare Ausdehnung hat.

4. Die Dosiervorrichtung (1) gemäß Anspruch 1 oder 2, **dadurch gekennzeichnet, dass** die Dosierkammer (2) eine geometrische Ringform hat und sich zwischen der vorderen Öffnung (3) und der hinteren Öffnung (5) entlang einem Kreisbogen erstreckt.

5. Die Dosiervorrichtung (1) gemäß Anspruch 4, **dadurch gekennzeichnet, dass** die Sensormittel (8) einen Magnetsensor (21) vom Winkel-Typ umfassen, der mit der Klappe (7) verbunden ist, um ihre Winkelposition im Verhältnis zu der inaktiven Position zu messen.

6. Die Dosiervorrichtung (1) gemäß einem oder mehreren der obigen Ansprüche, **dadurch gekennzeichnet, dass** die seitliche Öffnung (6) an einer radial externen Oberfläche der Dosierkammer (2) geformt ist, und dadurch, dass das Lösungselement (10) eine käfigartige geometrische Ringform hat, um die Dosierkammer (2) aufzunehmen und außerhalb derselben zu gleiten; wobei das Lösungselement (10) eine Trennwand (12) umfasst, die an der radial externen Oberfläche der Dosierkammer (2) angeordnet ist, um die seitliche Öffnung (6), je nach Position des Lösungselements (10), zu blockieren oder freizugeben.

7. Die Dosiervorrichtung (1) gemäß einem oder mehreren der obigen Ansprüche, **dadurch gekennzeichnet, dass** sie einen Schaber (16) zur Reinigung der vorderen Öffnung (3) umfasst, verbunden mit der Dosierkammer (2) am Rand der vorderen Öffnung (3) und mit den Antriebsmitteln (13) zum Zwecke seiner Bewegung an der vorderen Öffnung (3).

8. Die Dosiervorrichtung (1) gemäß einem oder mehreren der obigen Ansprüche, **dadurch gekennzeichnet, dass** sie Abdeckungsgehäuse (17, 18) für die Aufnahme der Komponenten der Dosiervorrichtung (1) umfasst.

9. Eine Maschine für die Abgabe aufgebrühter Getränke und dergleichen, insbesondere von der Art für Kaffee, die mindestens eines von Folgendem umfasst: einem Mahlaufbau (19), ausgebildet, um Kaffeebohnen zu Pulver zu zermahlen, einem Behälter für Kaffeepulver (4), ausgebildet, um lösliches Kaffeepulver (4) aufzunehmen, und einem Brühaufbau, für das Aufbrühen des Kaffeepulvers (4) funktionell mit einer Wasserpumpe verbunden; **dadurch gekennzeichnet, dass** sie eine Dosiervorrichtung (1) gemäß einem oder mehreren der obigen Ansprüche umfasst, wobei die Dosiervorrichtung (1) zwischen dem Brühaufbau und entweder dem Mahlaufbau (19) oder dem Behälter angeordnet ist.

10. Die Maschine für die Abgabe aufgebrühter Getränke und dergleichen gemäß Anspruch 9, **dadurch gekennzeichnet, dass** die Dosiervorrichtung (1) oberhalb des Brühaufbaus angeordnet ist zum Zwecke eines Fallens des Kaffeepulvers (4), aufgrund der Schwerkraft, durch die seitliche Öffnung (6) und seitlich zu entweder dem Mahlaufbau (19) oder dem Behälter zum Einfüllen des Kaffeepulvers (4) in die Dosierkammer (2) durch die vordere Öffnung (3).

## Revendications

1. Dispositif de dosage à volume variable (1), plus particulièrement destiné à une cafetière et similaire, comprenant :
- une chambre de dosage (2) ayant une forme allongée et s'étendant entre une ouverture avant (3), par laquelle du café en poudre (4) est introduit dans ladite chambre de dosage (2) parallèlement à l'extension longitudinale de ladite chambre de dosage (2), et une ouverture arrière (5) qui est opposée à ladite ouverture avant (3) ; ladite chambre de dosage (2) ayant une autre ouverture latérale (6) qui est prévue près de ladite ouverture avant (3) au niveau d'une surface latérale de celle-ci de façon à pouvoir vider ladite chambre de dosage (2) dudit café en poudre (4) par ladite ouverture latérale (6) ;
- un rabat (7) qui est prévu de manière coulissante dans ladite chambre de dosage (2) et peut se déplacer de manière opposée et grâce à l'action d'un moyen de retour élastique (11) entre une position inactive, dans laquelle ledit rabat (7) est prévu sensiblement de façon à fermer ladite chambre de dosage (2) au niveau de ladite ouverture avant (3), et une position active, dans laquelle ledit rabat (7) est prévu dans ladite chambre de dosage (2) entre une position intermédiaire comprise entre ladite ouverture avant (3) et ladite ouverture arrière (5) ;
- un moyen (8) destiné à détecter la position dudit rabat (7) dans ladite chambre de dosage (2) par rapport à ladite position inactive ;
- un moyen de commande et de gestion et un moyen d'actionnement (13) qui sont mutuellement associés et fonctionnellement reliés respectivement audit capteur (8), afin de déterminer la position dudit rabat (7), et audit élément de libération (10), en vue de son déplacement de ladite position de chargement vers ladite position de libération dès qu'une quantité prédéterminée de café en poudre (4) contenu dans ladite chambre de dosage (2) est atteinte en correspondance avec un position prédéterminée dudit rabat (7) dans ladite chambre de dosage (2) ;
le dispositif de dosage étant **caractérisé par** :
- un élément de libération (10) qui est associé de manière externe à ladite chambre de dosage (2) et peut se déplacer de manière opposée et grâce à l'action dudit moyen de retour élastique (11) entre une position de chargement, dans laquelle ledit élément de libération (10) est prévu de façon à obstruer ladite ouverture latérale (6), et une position de libération, dans laquelle ladite ouverture latérale (6) est exempte dudit élément de libération (10).

2. Dispositif de dosage (1) selon la revendication 1, **caractérisé en ce que** ladite ouverture latérale (6) est assistée par gravité, de façon à pouvoir vider ladite chambre de dosage (2) dudit café en poudre (4) suite à la chute de ladite poudre par gravité par ladite ouverture latérale (6).

3. Dispositif de dosage (1) selon la revendication 1 ou 2, **caractérisé en ce que** ladite chambre de dosage (2) possède une extension linéaire.

4. Dispositif de dosage (1) selon la revendication 1 ou 2, **caractérisé en ce que** ladite chambre de dosage (2) possède une forme géométrique toroïdale et s'étend entre ladite ouverture avant (3) et ladite ouverture arrière (5) le long d'un arc circulaire.

5. Dispositif de dosage (1) selon la revendication 4, **caractérisé en ce que** ledit capteur (8) comprend un capteur magnétique de type angulaire (21) qui est associé audit rabat (7) afin de mesurer sa position angulaire par rapport à ladite position inactive.

6. Dispositif de dosage (1) selon une ou plusieurs des revendications précédentes, **caractérisé en ce que** ladite ouverture latérale (6) est formée au niveau d'une surface radialement externe de ladite chambre de dosage (2) et **en ce que** ledit élément de libération (10) possède une forme géométrique de cage toroïdale de façon à contenir ladite chambre de dosage (2) et à coulisser en externe par rapport à celle-ci ; ledit élément de libération (10) comprenant une cloison (12) prévue au niveau de ladite surface radialement externe de ladite chambre de dosage (2) de façon à obstruer ou dégager ladite ouverture latérale (6) selon la position dudit élément de libération (10).

7. Dispositif de dosage (1) selon une ou plusieurs des revendications précédentes, **caractérisé en ce qu'**il comprend une lame (16), destinée à nettoyer ladite ouverture avant (3), associée à ladite chambre de dosage (2) au bord de ladite ouverture avant (3) et audit moyen d'actionnement (13) en vue de son déplacement sur ladite ouverture avant (3).

8. Dispositif de dosage (1) selon une ou plusieurs des revendications précédentes, **caractérisé en ce qu'**il comprend des boîtiers de protection (17, 18) destinés à contenir les composants dudit dispositif de dosage (1).

9. Machine destinée à distribuer des boissons infusées et similaires, plus particulièrement de type café, comprenant au moins l'un d'un ensemble de mouture (19) adapté pour moudre des grains de café en poudre, d'un contenant destiné au café en poudre (4) adapté pour contenir du café en poudre tout prêt (4), et d'un ensemble d'infusion relié à une pompe à eau pour l'infusion dudit café en poudre (4), **caractérisée en ce qu'**elle comprend un dispositif de dosage (1) selon une ou plusieurs des revendications précédentes, ledit dispositif de dosage (1) étant prévu entre ledit ensemble d'infusion et entre ledit ensemble de mouture (19) et ledit contenant.

10. Machine destinée à distribuer des boissons infusées et similaires selon la revendication 9, **caractérisée en ce que** ledit dispositif de dosage (1) est prévu au-dessus dudit ensemble d'infusion pour la chute par gravité dudit café en poudre (4) par ladite ouverture latérale (6), et latéralement entre ledit ensemble de mouture (19) et ledit contenant pour l'insertion dudit café en poudre (4) dans ladite chambre de dosage (2) par ladite ouverture avant (3).
